# EUROPEAN PATENT APPLICATION

(11) **EP 1 411 659 A1**
(43) Date of publication of application: **21.04.2004**
(21) Application number: 02257145.9
(22) Date of filing: 15.10.2002
(51) Int. Cl.: H04B 10/17

(54) **Apparatus and method for regeneration of optical signals**

(71) Applicant: CORNING INCORPORATED, Corning, N.Y. 14831 (US)
(72) Inventor: Cotter, David, Woodbridge, Suffolk IP12 4JN (GB)
(74) Representative: Poole, Michael John

(57) **Abstract**

Optical digital signals are regenerated by using an optical regenerator of the kind which incorporates an all-optical non-linear intensity modulator whose intensity transmission for the probe light exhibits such non-linear dependence on the intensity or pulse energy of the control signal that noise variations in the intensity or pulse energy of the control signal appear at a substantially reduced level in the output signal, so that the intensity of the probe light is modulated in accordance with the intensity or pulse energy of the control signal. Continuous and regular periodic optical phase modulation is applied to the probe light, the periodicity being equal to B or an integer multiple or submultiple of B, where B is the bit frequency of the control signal to regenerate a signal format in which frequency modulation is used to improve transmission characteristics, not to carry information (or exceptionally to convert the signal to a new format of this kind).

## Description

This invention relates to optical communications, and in particular to the regeneration of optical digital signals.

In current telecommunications networks the regeneration function is performed using O-E-O sub-systems (in which the incoming data signals are first converted from an optical signal to the electronic domain, processed using electronic circuitry, and then reconverted to an optical signal for onward transmission). A substantial fraction of the cost of installed long-haul networks resides in such O-E-O sub-systems. There is currently growing interest within the optical communications industry in prospects for optical regeneration, in which the signals are processed in the optical domain, eliminating the need for O-E and E-O conversion. Optical regeneration systems could perform a 2R function (re-amplifying and re-shaping the signals) or the more advanced 3R function (re-amplifying, re-shaping and re-timing). 2R Regeneration has the desired effect of suppressing intensity noise, but it is generally accompanied by an undesired increase in electrical phase noise or timing jitter at the receiver. Full 3R regeneration has the desired effect of suppressing both amplitude and phase (timing) noise.

It is predicted (though unproven) that technology for regeneration in the optical domain can be developed at lower cost than O-E-O sub-systems with equivalent functionality, at least for higher speed transmission systems (say 40 Gbit/s and beyond).

Design concepts for 2R and 3R optical regenerators have been proposed and early technology prototypes are being developed by several companies. The designs that show greatest promise for operation at 40 Gbit/s and beyond are based on non-linear interferometric structures (such as Mach-Zehnder interferometers) containing semiconductor optical amplifiers (SOA's). The non-linear characteristic of the interferometer is due to the non-linear gain and refractive index of an SOA when operated at high input power or pulse energy. These interferometric structures are arranged to provide a non-linear intensity transfer function between the input (noisy) data signal and the output signal, so as to suppress the intensity noise. The operation of these devices is dependent on the intensity or pulse energy of the input signals, and is independent of any phase information in the electric field of the input signal. They are therefore well-suited to the regeneration of optical data signals - such as those in return-to-zero (RZ) or non-return-to-zero (NRZ) format - in which the intended modulation is entirely in the form of modulation of the intensity or pulse energy of the signals.

Concurrently, alternative transmission formats are being considered, and some are thought to have significant advantages for 40 Gbit/s transmission. Several of these proposed formats involve the combination of deliberate phase modulation and amplitude modulation of the optical electric field. Regenerators so far being developed are unsuitable for regeneration of data signals that contain deliberate phase modulation of the optical electric field, because the optical phase modulation in the input signal is not preserved at the output, and so there is a need for new methods of optical regeneration of signals that contain deliberate phase modulation.

Of these proposed formats that include deliberate phase modulation, there are two categories that can be distinguished. In the first category, the phase modulation is periodic (generally at the bit rate or some multiple or sub-multiple) and itself carries no data information. In the second category, the phase modulation is non-deterministic and conveys, or contributes to the conveyance, of the data information. The present invention relates to 2R and 3R regeneration of optical signals with formats in the first category (only).

An example of a transmission format in the first category is return-to-zero-with-alternating-phase (AP-RZ), in which the phase of the optical electric field in alternate bit periods is shifted by π radians. One desirable effect of this alternating phase modulation is to suppress the unmodulated carrier in the optical spectrum, so reducing the total energy of the signal without loss of information content (and so it is alternatively called carrier-suppressed RZ or CS-RZ). Another effect is to add tones at ±*B*/2 away from the carrier frequency (where B is the bit frequency), and in principle at ±3B/2, ±5B/2 and higher harmonics. Another example of a transmission format in the first category is chirped RZ (C-RZ), in which the phase of the electric field is swept in a regular periodic fashion at the bit frequency. The alternate-phase RZ and chirped RZ formats have both been suggested as having significant advantages for 40 Gbit/s transmission, and are among the prime contenders for future 40 Gbit/s dense wavelength-division multiplex optical communication systems. Phase alternation and chirping can be used together, resulting in a format called alternate-phase chirped RZ (AP-C-RZ). A recent proposal (nC-RZ) would phase-modulate RZ pulses with a sinusoidal waveform at half the bit frequency.

In an optical regenerator, the information data carried by the input signal is impressed onto light from a light source (ordinarily at a different wavelength from that which carries the incoming data) in such a way that noise and other imperfections in the input optical signal are suppressed in the optical output from the regenerator. The incoming optical data signal at the regenerator will here be called the 'control signal', the light from the light source called the 'probe light', and the optical output from the regenerator called the 'output signal'.

The source of probe light is often considered to be an integral part of the optical regenerator, but it is possible and may sometimes be desirable for the probe light to be generated at a separate location and fed to the regenerator over some distance (for example, in a large optical system or central office (or telephone exchange), in which the probe light fed to several optical regenerators could be derived from a common shared source).

The optical regenerator in accordance with the invention incorporates an all-optical non-linear intensity modulator whose intensity transmission for the probe light exhibits such non-linear dependence on the intensity or pulse energy of the control signal that noise variations in the intensity or pulse energy of the control signal appear at a substantially reduced level in the output signal, whereby the intensity of the probe light may be modulated in accordance with the intensity or pulse energy of the control signal and is *characterised* by including a phase modulator and a driver enabling the phase modulator to apply continuous and regular periodic optical phase modulation to the probe light, the periodicity being equal to B or an integer multiple or sub-multiple of B, where B is the bit frequency of the control signal.

Usually the phase modulator will be a single separate component, but when the non-linear interferometer is of the preferred kind including a semiconductor optical amplifier in each of its arms, it is possible (but not preferred) to periodically modulate the current to the semiconductor optical amplifiers, at a low level, to cause the probe light to be phase modulated.

The invention also includes a method of regenerating an optical digital signal which is *characterised* by applying continuous and regular periodic optical phase modulation to the probe light, the periodicity being equal to B or an integer multiple or sub-multiple of B, where B is the bit frequency of the control signal.

Usually the form of the optical phase modulation will be substantially the same as the pattern of phase modulation present in the control signal, so that the amplitude and phase modulation of the optical electric field of the output signal is identical to or at least closely approximating the original amplitude and phase modulation of the optical electric field of the control signal; but the invention can also be used to change the signal format, if a need to do so should arise (including changing a signal in a conventional format to one in which phase modulation of the kind discussed is used).

3R Regenerators in accordance with the invention may use any conventional type of clock recovery for retiming, and in particular the recovered clock signal may control a pulsed light source or an intensity modulator supplied with continuous-wave light. In one preferred form of the invention, an electro-optically active modulator is used to modulate continuous-wave light with both re-timing amplitude pulse modulation and phase modulation.

Phase modulation, signal modulation and re-timing (in the 3R case) may be applied to continuous-wave light in any order, but we usually prefer to apply signal modulation last.

The invention will be further described, by way of example, with reference to the accompanying drawings in which:
Figure 1 is a diagram of a 2R regenerator in accordance with the invention for AP-RZ signals each of Figures 2-5 is a diagram of a different 3R AP-RZ regenerator in accordance with the invention;
Figure 6 is a schematic diagram of an electro-optic Mach Zehnder modulator forming part of the apparatus of Figure 5; each of Figures 7-10 is a graph illustrating various characteristics of this type of modulator;
Figure 11 is a diagram of a modified form of 3R AP-RZ regenerator in accordance with the invention;
Figures 12 and 13 show respectively a 3R and a 2R regenerator in accordance with the invention for signals in C-RZ format;
Figure 14 shows a 3R regenerator in accordance with the invention for signals in AP-C-RZ format; and
Figure 15 shows an alternative regenerator in accordance with the invention in which the use of a separate modulator component is avoided.

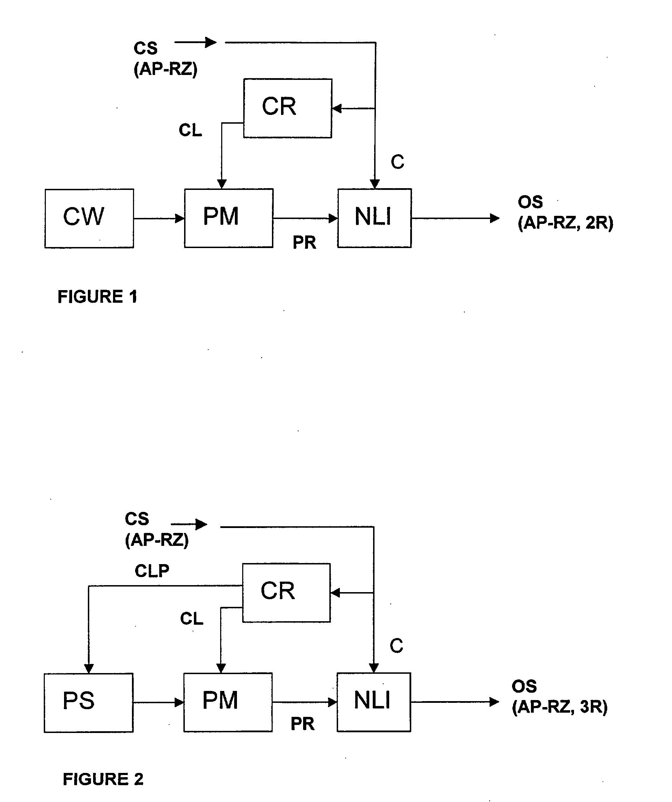

In the form of the invention shown in Figure 1, the control signal is, primarily, sent to a non-linear interferometer NLI which acts as amplitude modulator for the output signal OS; if this were a 2R regenerator for the current RZ format, NLI would simply be supplied with probe light PR from a continuous wave source CW (such as a laser diode) but in accordance with the invention the regenerator includes a phase modulator PM and a driver in the form of a clock recovery circuit CR which receives a fraction of the control signal to enable it to supply to the driver an electrical clock signal CL of predetermined wave-form which is synchronised to the control signal and has a frequency equal to half the bit rate. Since the apparatus is designed for AP-RZ format, the appropriate wave-form is such that the optical phase of light emerging from PM is close to a rectangular wave, with an amplitude of n radians and period of CL.

The NLI should be designed and operated so as to minimize the amount of phase chirp that it introduces. However, in a refinement (applicable also to other forms of the invention), the waveform of the periodic drive signal (CL) applied to PM could be adjusted so as to minimize the chirp in the output from the regenerator; thus the phase modulation introduced by PM can provide pre-compensation for chirp introduced by NLI.

Because clock recovery is required, adding complexity and cost and eliminating the bit-rate transparency which is a main advantage of 2R regeneration as hitherto proposed, 2R regenerators in accordance with the invention are considerably less attractive than the 3R regenerators now to be described.

Figure 2 shows a first form of 3R regenerator for AP-RZ optical data signals, which is similar to the 2R regenerator of Figure 1 except that clock recovery includes the generation of a second clock signal CLP with a frequency equal to the bit rate, which is fed to a pulse source PS which thus provides to the phase modulator pm probe light in the form of regular pulses synchronised to the control signal.

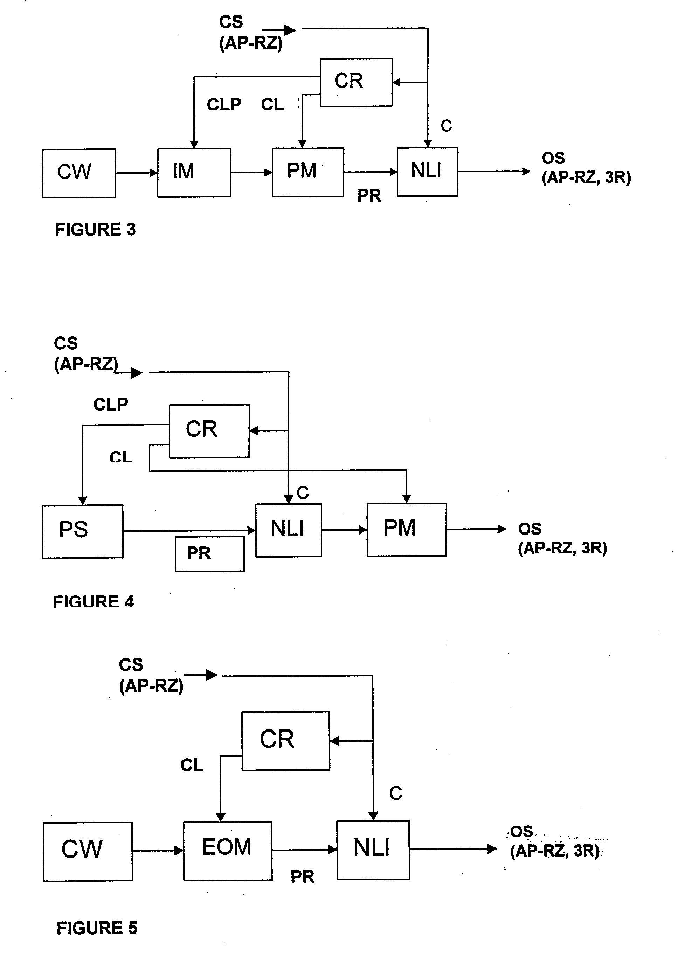

Figure 3 illustrates that a continuous wave source CW and an external intensity modulator IM can be used in place of the pulse source PS of Figure 2.

Figure 4 differs from Figure 2 only insofar as the sequence of PM and NLI is reversed, so that intensity modulation is applied to the probe light prior to phase modulation; the end result is substantially the same.

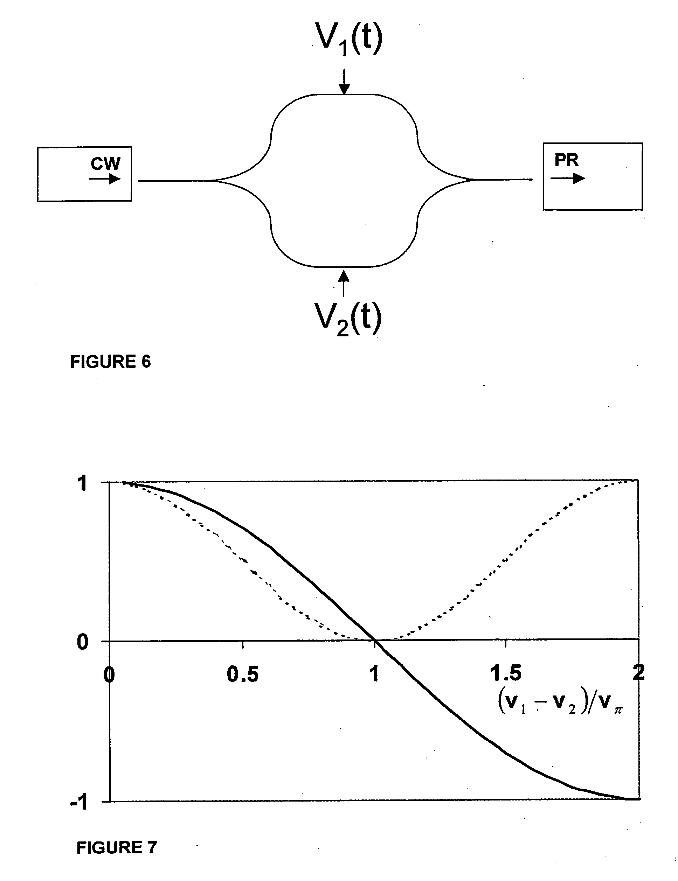

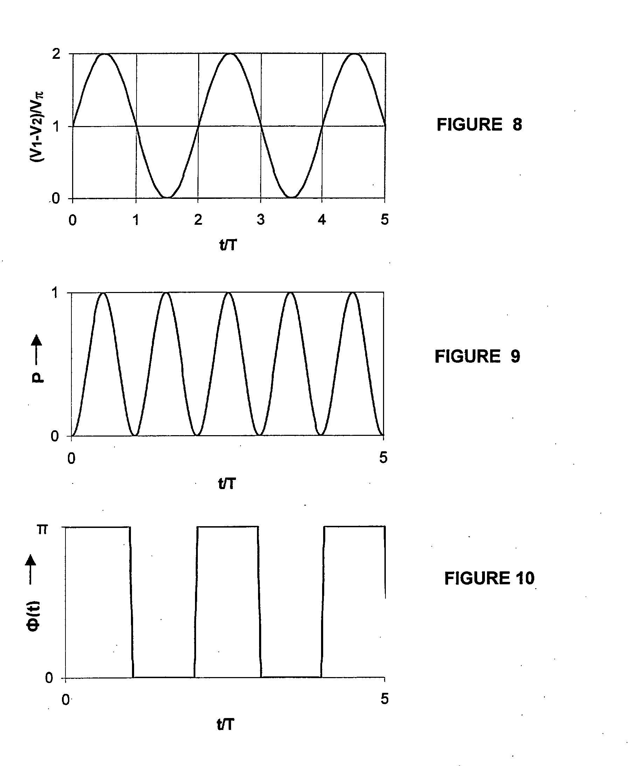

Figure 5 shows a modified form of regenerator in which an electro-optic Mach-Zehnder modulator (EOM), preferably a lithium-niobate Mach Zehnder modulator, performs the functions of IM and PM in Figure 3. This is explained further with reference to Figures 6 to 10. Figure 6 shows schematically control voltages *V*₁(*t*) and *V*₂(*t*) applied to the arms of the interferometer. Figure 7 shows the optical electric field (solid curve) and power transmission (dotted curve) of an EOM as a function of the difference between *V*₁(*t*) and *V*₂(*t*) relative to the characteristic half-wave voltage *V*_{π} of the device, where the device is given a d.c. voltage bias of *V*₁*-V*₂*=V*_{π}. If the voltage *V*₁(*t*)-*V*₂(*t*) is a sine wave with period 2T, where T is the bit period of the data signal input to the regenerator, as shown in Figure 8, the power P and optical phase Φ(t) of the output from the electro-optic modulator changes with time as shown in Figures 9 and 10 respectively. The output is a continuous train of optical pulses, with period T, and the optical phase of adjacent pulses differs by n radians. The electro-optic modulator is a narrowband microwave device (e.g. centred at 20 GHz for a 40 Gbit/s system), and so the device package and associated microwave drive electronics can be simpler and of lower cost than the broadband devices used for data modulation.

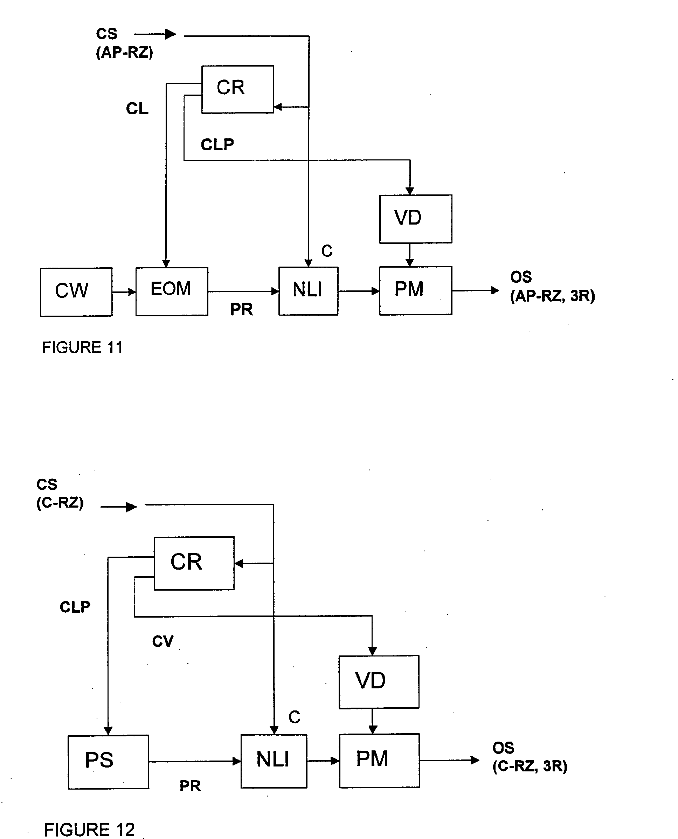

Figure 11 shows a modification to the apparatus of Figure 5; in VD is a variable delay acting on a clock signal CV with a frequency equal to the bit rate which is sent to a phase modulator PM. The length of delay VD, the amplitude and/or the waveform of the clock signal are adjusted so that phase modulation introduced by PM provides post-compensation for any chirp introduced by NLI.

The apparatus of Figure 12 applies the same principle to the regeneration of a C-RZ signal (it is shown with a pulse source PS, but could equally be used with a continuous wave source and external modulator); instead of adjusting to eliminate chirp, the three variables would now be adjusted to obtain a specific degree and form of chirp judged optimum for onward transmission.

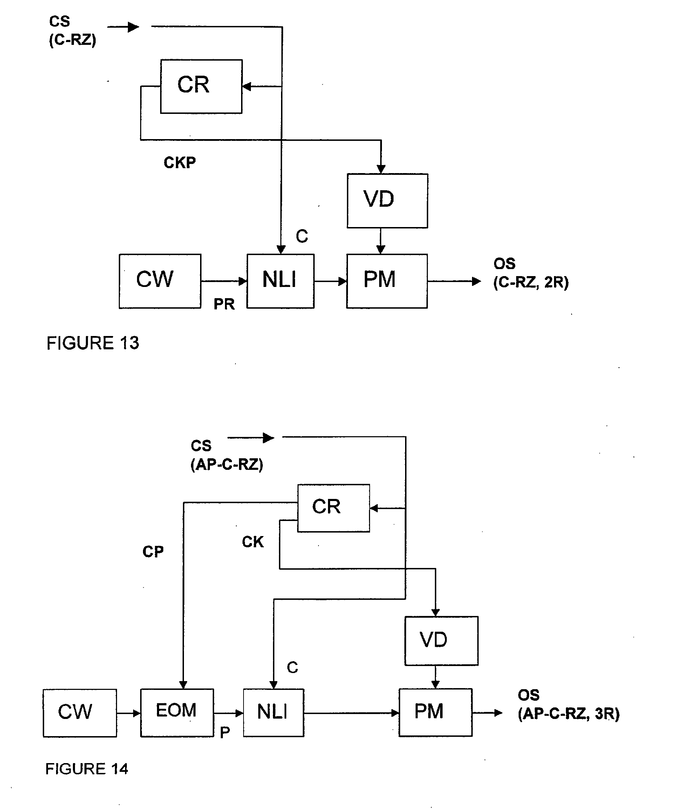

Figure 13 shows, just for completeness, a 2R regenerator for C-RZ optical data signals, which is believed self-explanatory.

The invention can be applied to other transmission formats that involve continuous periodic phase modulation of the optical electric field. By way of example, Figure 14 shows a 3R regenerator for signals in AP-C-RZ format, in which the optical phase Φ(*t*) as a function of time *t* is given by Φ(*t*+*T*) = Φ(*t*)+ π, where *T* is the bit period, i.e. the optical phase of pulses in adjacent bit periods differ by n radians, but the sign of the chirp (the second time differential of Φ(*t*)) is the same in each bit period. The alternating π phase is provided by EOM, as described for Figure 7, whereas the timing, amplitude and/or waveform of the periodic drive signal applied to PM are adjusted so that the chirp on the output pulses from the regenerator (which incorporates any chirp introduced by NLI) is optimum for subsequent transmission.

A regenerator for nC-RZ signals looks substantially the same as Figure 4, but in this case the signal CL driving the modulator PM is of sinusoidal waveform. A refinement is to adjust that waveform so as to provide post-compensation for any chirp introduced by NLI.

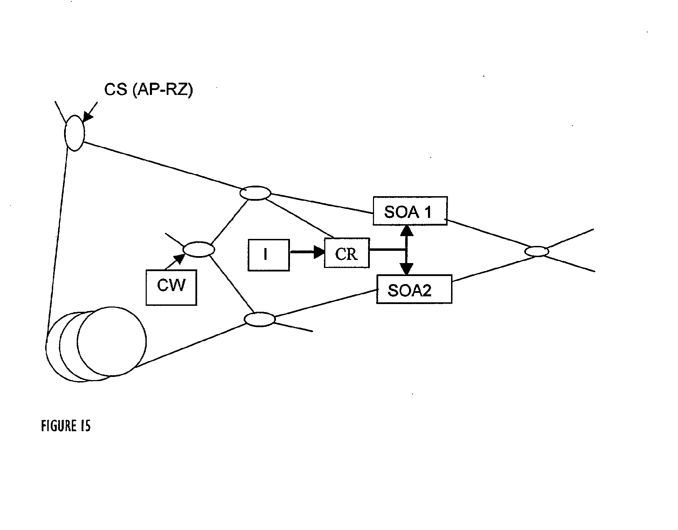

Figure 15 shows an alternative arrangement in which the use of a separate phase modulator is avoided. In the usual way, a Mach-Zehnder modulator with semiconductor optical amplifiers SOA 1 and SOA 2 in its respective limbs receives probe light from source CW and control signal CS into each limb, the control signal being delayed. Drive current from source I has superimposed on it a radio-frequency electrical waveform, derived from a clock recovery circuit CR so as to be synchronised with the incoming optical signal. Depending on design details, a variation of the order of 10% of the drive current will be found to give the desired phase shift of half a wavelength (n radians) for typical semiconductor optical amplifiers 500µm long. Either a sinusoidal or a square radio-frequency waveform is considered satisfactory. Since the superimposed radio-frequency electrical waveform is applied equally to both of the semiconductor optical amplifiers, it has no substantial effect on the action of the interferometer, but only imposes periodic phase modulation.

This technique offers the potential to reduce costs by elimination of a separate modulator, but this has to be offset because the semiconductor optical amplifier will need packaging suitable for narrow-band radio frequency operation; the control of the semiconductor optical amplifier may be complicated; and some undesirable amplitude modulation will accompany the phase modulation of the signal, which may necessitate some pulse reshaping.
*Any discussion of the background to the invention herein is included to explain the context of the invention. Where any document or information is referred to as "known", it is admitted only that it was known to at least one member of the public somewhere prior to the date of this application.*
*Unless the content of the reference otherwise clearly indicates, no admission is made that such knowledge was available to the public or to experts in the art to which the invention relates in any particular country (whether a member-state of the PCT* or *not), nor that it was known or disclosed before the invention was made or prior to any claimed date. Further, no admission is made that any document or information forms part of the common general knowledge of the art either on a world-wide basis or in any country and it is not believed that any of it does so.*

## Claims

1. An optical regenerator which incorporates an all-optical non-linear intensity modulator whose intensity transmission for the probe light exhibits such non-linear dependence on the intensity or pulse energy of the control signal that noise variations in the intensity or pulse energy of the control signal appear at a substantially reduced level in the output signal, whereby the intensity of the probe light may be modulated in accordance with the intensity or pulse energy of the control signal and is ***characterised* by** including a phase modulator and a driver enabling the phase modulator to apply continuous and regular periodic optical phase modulation to the probe light, the periodicity being equal to B or an integer multiple or sub-multiple of B, where B is the bit frequency of the control signal.

2. A regenerator in accordance with claim 1 in which the non-linear interferometer is a Mach Zehnder interferometer.

3. A 3R regenerator in accordance with claim 1 or claim 2 comprising a pulsed light source and means for generating a recovered clock signal to control it.

4. A 3R regenerator in accordance with claim 1 or claim 2 comprising an intensity modulator and means for generating a recovered clock signal to control it.

5. A 3R regenerator in accordance with claim 4 including a source of continuous-wave light.

6. A 3R regenerator in accordance with claim 4 or claim 5 in which the said intensity modulator is an electro-optically active combined amplitude and phase modulator.

7. A method of regenerating an optical digital signal by using an optical regenerator which incorporates an all-optical non-linear intensity modulator whose intensity transmission,for the probe light exhibits such non-linear dependence on the intensity or pulse energy of the control signal that noise variations in the intensity or pulse energy of the control signal appear at a substantially reduced level in the output signal, whereby the intensity of the probe light may be modulated in accordance with the intensity or pulse energy of the control signal which is ***characterised* by** applying continuous and regular periodic optical phase modulation to the probe light, the periodicity being equal to B or an integer multiple or sub-multiple of B, where B is the bit frequency of the control signal.

8. A method as claimed in claim 7 in which the form of the optical phase modulation is substantially the same as the pattern of phase modulation present in the control signal, so that the amplitude and phase modulation of the optical electric field of the output signal is identical to or at least closely approximating the original amplitude and phase modulation of the optical electric field of the control signal.

9. A method as claimed in claim 7 of regenerating an optical digital signal and changing the signal format, in which the form of the optical phase modulation is substantially different from any pattern of phase modulation present in the control signal.

10. A method of 3R regeneration in accordance with any one of claims 7-9 comprising using a pulsed light source for re-timing.

11. A method of 3R regeneration in accordance with any one of claims 7-9 comprising using an intensity modulator for retiming with a continuous-wave source.

12. A method in accordance with claim 11 comprising using as the intensity modulator an electro-active modulator which also applies the desired phase modulation.

13. A method in accordance with any one of claims 7-12 comprising using a delayed clock signal to regulate chirp.
